# EUROPEAN PATENT APPLICATION

(11) **EP 4 060 349 A1**
(43) Date of publication of application: **21.09.2022**
(21) Application number: 20886730.9
(22) Date of filing: 19.10.2020
(51) Int. Cl.: G01N 35/02, G01N 35/10

(54) **AUTOMATIC ANALYSIS DEVICE**

(30) Priority: 13.11.2019 JP 2019205278
(71) Applicant: Hitachi High-Tech Corporation, Minato-ku Tokyo 105-6409 (JP)
(72) Inventor: IWAMATSU, Tomoaki, Tokyo 105-6409 (JP); OKUSA, Takenori, Tokyo 105-6409 (JP); SUENARI, Tsukasa, Tokyo 105-6409 (JP)
(74) Representative: Strehl Schübel-Hopf & Partner
(86) International application number: PCT/JP2020/039206
(87) International publication number: WO 2021/095444

(57) **Abstract**

Provided is an automatic analyzer that reduces a risk of damage due to contact with a stirring paddle during maintenance and the like, and realizes miniaturization and simplification. A cleaning tank 181 configured to clean the stirring paddle, a standby position 182 configured to make the stirring paddle which is juxtaposed to the cleaning tank wait, and an inflow port 183 configured to flow cleaning water into the cleaning tank are provided, and the standby position 182 is arranged so that the cleaning water overflowing from the cleaning tank 181 overflows 194 to the standby position 182.

## Description

### Technical Field

The present invention relates to an automatic analyzer.

### Background Art

In an automatic analyzer in the related art, in order to maintain a certain level of performance, a user is required to clean a nozzle or a probe that dispenses a sample or a reagent, and a stirring paddle that stirs a bead reagent. In addition, since a reagent bottle is mounted, the user may be required to take the reagent bottle in and out of a reagent storage unit inside the automatic analyzer.

However, depending on a unit layout in the automatic analyzer and an environment such as an inspection room where the automatic analyzer is provided, the user may have to access a unit such as a bound/free (B/F) separation unit arranged from a front to a back of the analyzer. In this case, the user needs to be careful not to come into contact with another unit such as a reagent dispensing mechanism in the front of the analyzer, and manually retract an obstructing unit. When the user comes into contact with the unit, there is a risk of damage to the unit, and it is necessary to carry out a work while paying attention not to come into contact with the unit in the front of the analyzer.

Therefore, in the technique described in PTL 1, a reagent dispensing mechanism retraction unit with which a reagent dispensing mechanism is retracted is disposed on a trajectory of an arm of the reagent dispensing mechanism, and a reagent dispensing nozzle is retracted by the reagent dispensing mechanism retraction unit to prevent direct contact with the reagent dispensing nozzle, a user, etc.

### Citation list

### Patent Literature

PTL 1: WO2019/026498

### Summary of Invention

### Technical Problem

In an automatic analyzer to which the above-described method for retracting a reagent dispensing mechanism is applied, the contact with the reagent dispensing nozzle can be prevented, and according to a further study on a positional relationship between a retraction unit and a cleaning unit of a bead mixer mechanism that stirs a bead reagent, miniaturization and simplification of the automatic analyzer are desired.

In order to solve the above-described problem, an object of the invention is to provide an automatic analyzer capable of reducing a risk of damage due to contact with a rod-shaped member such as a dispensing nozzle and a stirring paddle of a bead mixer mechanism, and realizing miniaturization and simplification.

### Solution to Problem

In order to achieve the above-described object, the invention provides an automatic analyzer including a storage unit configured to store a rod-shaped member along a vertical direction and a cleaning unit configured to clean the rod-shaped member.

In order to achieve the above-described object, the invention provides an automatic analyzer including a cleaning tank configured to clean a stirring paddle, a standby position configured to make the stirring paddle which is juxtaposed to the cleaning tank wait, and an inflow port configured to flow cleaning water into the cleaning tank, in which the standby position is arranged so that the cleaning water overflowing from the cleaning tank flows into the standby position.

### Advantageous Effect

An automatic analyzer that reduces a risk of damage due to contact with a rod-shaped member such as a stirring paddle during maintenance and achieves miniaturization and simplification can be provided.

### Brief Description of Drawings

[FIG. 1] FIG. 1 is a top view of a schematic configuration example of an automatic analyzer according to Embodiment 1.
[FIG. 2] FIG. 2 is a schematic diagram of a bead mixer mechanism and a bead mixer cleaning unit of the analyzer according to Embodiment 1.
[FIG. 3] FIG. 3 is a schematic diagram showing a modification of the bead mixer cleaning unit of the analyzer according to Embodiment 1.
[FIG. 4] FIG. 4 is a diagram showing a specific configuration example of the bead mixer cleaning unit of the analyzer according to Embodiment 1.
[FIG. 5] FIG. 5 is a sectional view for illustrating a relationship between a stirring paddle and a standby position of the analyzer according to Embodiment 1.
[FIG. 6A] FIG. 6A is a diagram showing a state of the stirring paddle in a cleaning step of the stirring paddle according to Embodiment 1.
[FIG. 6B] FIG. 6B is a diagram showing a state (continued) of the stirring paddle in the cleaning step of the stirring paddle according to Embodiment 1.
[FIG. 7] FIG. 7 is a diagram showing an operation flowchart of a cleaning procedure of the stirring paddle during an analysis operation of the analyzer according to Embodiment 1.
[FIG. 8] FIG. 8 is a diagram showing an operation flowchart of the stirring paddle during a maintenance operation of the analyzer according to Embodiment 1.
[FIG. 9] FIG. 9 is a schematic diagram of a reagent dispensing mechanism and a reagent dispensing nozzle cleaning unit of an analyzer according to Embodiment 2.

### Description of Embodiments

Hereinafter, embodiments for carrying out the invention will be described with reference to the drawings. In the following embodiments, an automatic analyzer will be described as an example. The automatic analyzer includes, for example, a biochemical automatic analyzer and an immunological automatic analyzer. However, the above automatic analyzer is an example of the invention, and the invention is not limited to the embodiments described below, and extensively includes an analyzer that makes a specimen react with a reagent and analyzes the specimen based on a reaction result. For example, the invention may include a mass spectrometer used for a clinical examination, a coagulation analyzer that measures a blood coagulation time, and the like. In addition, the invention may also be applied to a combined system that combines the mass spectrometer and the coagulation analyzer with the biochemical automatic analyzer and the immunological automatic analyzer, or an automatic analysis system to which these analyzers are applied.

In the present description, standby means to retract a rod-shaped member of the analyzer in order to prevent contact between the rod-shaped member and an operator during a maintenance operation of the analyzer. In addition to a stirring paddle, the rod-shaped member includes dispensing nozzles such as a reagent dispensing nozzle and a specimen dispensing nozzle, and the invention can be applied to a rod-shaped member of the automatic analyzer other than the stirring paddle.

### Embodiment 1

Embodiment 1 is an embodiment of an automatic analyzer that automatically analyzes a specific component in a specimen such as blood or urine by using an immune response. In an immunoassay method using the immune response, a measurement target component and a labeling substance are bound to each other by an antigen-antibody reaction, and the labeling substance is quantitatively or qualitatively measured according to signals (such as light emission and absorption) obtained from the labeling substance.

In this case, in order to remove an excessively added labeling substance, an operation which is B/F separation is performed to remove the labeling substance that is not bound to the target substance. In the automatic analyzer, a method using magnetic beads is widely adopted to automatically perform the B/F separation. In the B/F separation using the magnetic beads, the magnetic beads are further bound to an immune complex in which a measurement target substance and the labeling substance are bound to each other, and a solution is substituted with the magnetic beads adsorbed by a magnet, whereby the excess labeling substance is removed from the reaction solution. This method is suitable for automation and is thus widely used in the automatic analyzer.

However, since the magnetic beads have a specific gravity larger than that of the solution, the magnetic beads sink, resulting in non-uniformity of concentration. The non-uniform concentration of the magnetic beads causes an analysis result to be incorrect. Therefore, the automatic analyzer includes a mechanism for stirring a reagent containing the magnetic beads (hereinafter, referred to as a bead reagent) accommodated in a reagent vessel to make the concentration uniform.

Stirring of the magnetic beads is often performed by putting a stirring member having a paddle-shaped structure in a bead reagent solution and rotating the stirring member. After stirring the bead reagent, the stirred solution adheres to the stirring member. When another solution is stirred with the stirring member to which the solution adheres in this way, mixing of the solutions may occur, compositions may change, and analysis may not be performed correctly. Therefore, it is necessary to clean the stirring member after stirring.

In order to deal with the above-described problem, in the present embodiment, a stirring paddle that stirs the bead reagent, a cleaning tank that cleans the stirring paddle, a standby position that makes the stirring paddle which is juxtaposed to the cleaning tank wait, and an inflow port that flows cleaning water into the cleaning tank are provided, and the standby position is arranged so that the cleaning water overflowing from the cleaning tank flows into the standby position.

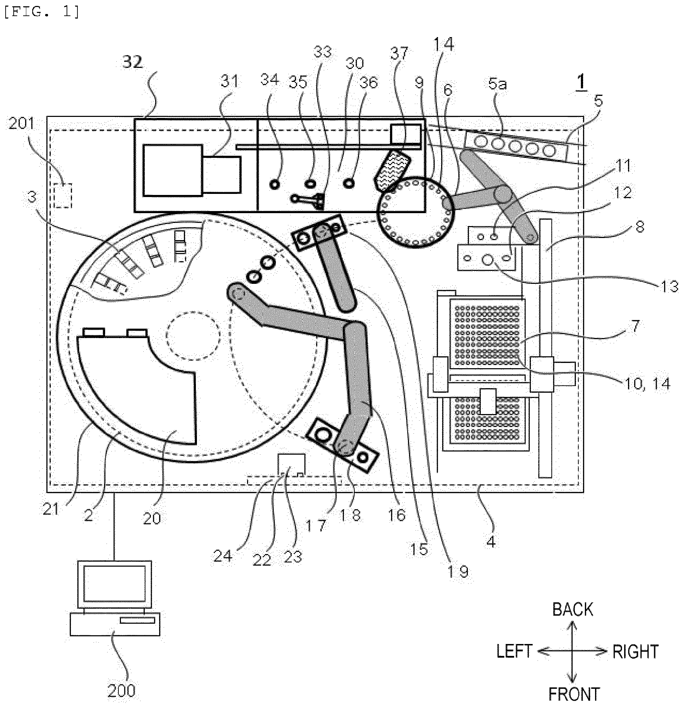

FIG. 1 is a top view of a schematic configuration example of an automatic analyzer 1 according to Embodiment 1. A safety cover 4 being a top cover covering the entire automatic analyzer 1 and shown by broken lines is provided, and a door open and close detection sensor 201 detects opening and closing of the safety cover 4. The safety cover 4 includes a safety cover front side, a lock receiving unit 22, a lock unit (interlock unit) 23, and a handhold unit 24.

The automatic analyzer shown in FIG. 1 includes a specimen transport line 5 that transports a specimen rack 5a, a reagent disk 2 that stores a plurality of reagent vessels 3, an incubator 9 which is a reaction disk, a specimen dispensing mechanism 6 that dispenses a specimen, a reagent dispensing mechanism 15, a bead mixer mechanism 16 that stirs a bead reagent by using a stirring paddle 17, a B/F separation probe 33 constituting a B/F separation unit 30, a detection unit 31, and the like.

The specimen rack 5a accommodates a plurality of specimen vessels, that are sample vessels, for accommodating biological specimens such as blood and urine, and the specimen rack 5a is transported on the specimen transport line 5 in a state where the specimen vessels are accommodated thereon.

A reagent cool box 21 has a cylindrical shape and accommodates the reagent disk 2. At least a part of an upper surface of the reagent disk 2 is covered with a reagent disk cover. A reagent vessel loading port 20 for attaching and detaching the reagent vessel 3 to and from the reagent disk 2 is provided on an upper surface of the reagent cool box 21. The reagent vessel loading port 20 is provided with an openable reagent vessel loading port lid. The reagent cool box 21 has a heat insulating function in order to control the reagent vessel 3 to a constant temperature.

The incubator 9 includes a reaction vessel arrangement unit in which a plurality of reaction vessels 14 for making a specimen react with a reagent are arranged, and a temperature adjustment mechanism (not shown) that adjusts a temperature of the reaction vessels 14 to a desired temperature. The specimen dispensing mechanism 6 includes a rotation drive mechanism and a vertical drive mechanism, and can aspirate the specimen from the specimen vessel by these drive mechanisms, move the specimen above the reaction vessels 14 accommodated in the incubator 9, and dispense the specimen into the reaction vessels 14.

The reagent dispensing mechanism 15 also includes a rotation drive mechanism and a vertical drive mechanism, and can aspirate the reagent from the reagent vessel 3 by these drive mechanisms, move the reagent above the reaction vessels 14 accommodated in the incubator 9, and dispense the reagent into the reaction vessels 14.

As will be described later, the bead mixer mechanism 16 that stirs the bead reagent includes a rotation drive mechanism and a vertical drive mechanism, and stirs the reagent in the reagent vessel 3 by rotating the rod-shaped stirring paddle 17. In addition, the automatic analyzer 1 includes a bead mixer cleaning unit 18 that cleans the stirring paddle 17, and a reagent dispensing nozzle cleaning unit 19 that cleans a reagent dispensing nozzle.

Specimen dispensing tips 10 and the reaction vessels 14 are placed on a tip rack 7 which is a specimen dispensing tip/reaction vessel supply unit. A specimen dispensing tip/reaction vessel transport mechanism 8 transports the reaction vessels 14 from the tip rack 7 to the incubator 9 via a specimen dispensing tip buffer 11. A specimen dispensing tip/reaction vessel disposal hole 12 and a stirring mechanism 13 are provided on a specimen dispensing tip buffer 11 side.

The specimen dispensing tip/reaction vessel transport mechanism 8 transports a plurality of unused reaction vessels 14 and a plurality of unused specimen dispensing tips 10 from the tip rack 7 to the incubator 9 or to the specimen dispensing tip buffer 11 accessed by the specimen dispensing mechanism 6, or transports the reaction vessel 14 containing a reaction solution from the incubator 9 to the stirring mechanism 13.

The B/F separation unit 30 provided in a detection unit cover 32 includes a separation unit 34 that collects magnetic beads, the B/F separation probe 33 that aspirates the reaction solution and discharges a buffer solution, a B/F separation probe cleaning unit 35 that cleans the B/F separation probe 33, a B/F separation stirring unit 36 that redistributes the magnetic beads once collected, a transport mechanism 37 that transports the reaction vessels 14 provided in the incubator 9 to the B/F separation unit 30 and the detection unit 31, and the like.

The detection unit 31 includes a reaction solution aspiration nozzle (not shown) that aspirates the reaction solution in the reaction vessel 14, a photomultiplier tube or a light source lamp, a spectroscope, a photodiode (not shown), and the like, has a function of adjusting temperatures thereof, and analyzes the reaction solution.

Further, the automatic analyzer 1 includes a control unit 200 that controls all operations. The control unit 200 can be implemented by a normal computer configuration, and includes a central processing unit (CPU), a storage unit (memory), an external storage device such as a hard disk, an operation unit, and the like. The operation unit is implemented by, for example, a display unit which is a display, and an input device such as a mouse or a keyboard. A control device (not shown) connected to the control unit 200 may be implemented by hardware by a dedicated circuit board, or may be implemented by software executed by a host computer connected to the automatic analyzer 1.

When the control device is implemented by hardware, such a configuration can be implemented by integrating, on a wiring board or in a semiconductor chip or a package, a plurality of calculators that execute processing. When the control device is implemented by software, such a configuration can be implemented by mounting a high-speed general-purpose CPU on the host computer and executing a program that executes desired calculation processing. An existing device can be upgraded with a recording medium on which the program is recorded. These devices, circuits, and computers are connected by a wired or wireless network, and appropriately transmit and receive data.

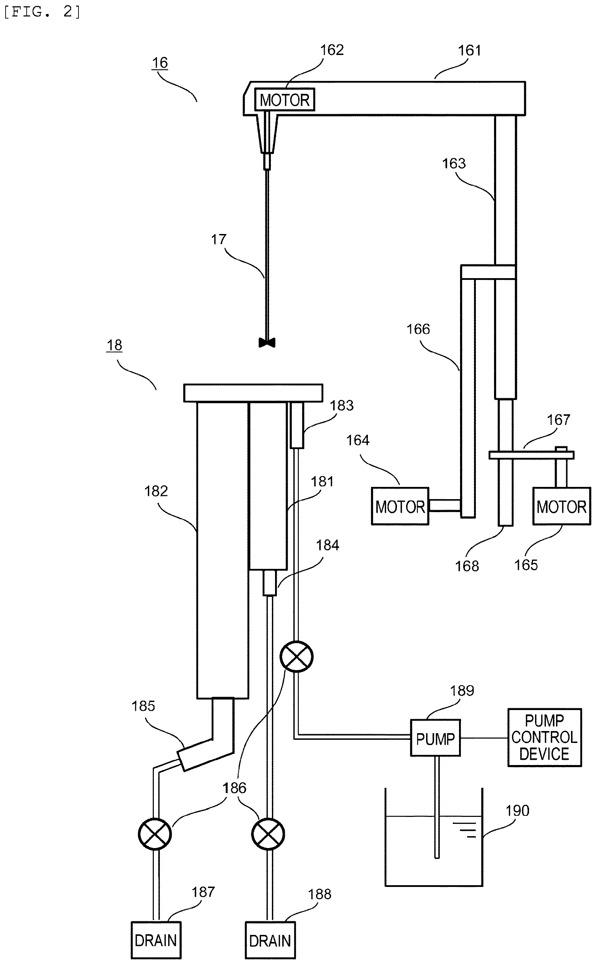

FIG. 2 is a schematic diagram of the bead mixer mechanism 16 and the bead mixer cleaning unit 18 of the automatic analyzer according to the present embodiment. In FIG. 2, the bead mixer mechanism 16 includes a bead mixer arm 161, which is provided with the rod-shaped stirring paddle 17 that is attached to a tip of the bead mixer arm 161 and a motor 162 that rotates the stirring paddle 17. In addition, the bead mixer mechanism 16 includes a vertical drive motor 164, a shaft 163 capable of moving up and down independently of a mechanism shaft 168, a vertical drive belt 166 connecting the vertical drive motor 164 and the shaft 163, and thereby can drive the stirring paddle 17 vertically. Further, the bead mixer mechanism 16 includes a rotation drive motor 165 and a rotation drive belt 167 connecting the rotation drive motor 165 and the mechanism shaft 168, and thereby can drive the stirring paddle 17 to rotate.

Meanwhile, the bead mixer cleaning unit 18 includes a cleaning tank 181 and a standby position 182 that makes the stirring paddle 17 which is juxtaposed to the cleaning tank 181 wait and that stores the stirring paddle 17, and a water supply port 183 that supplies water to the cleaning tank 181. The cleaning tank 181 which is a cleaning unit and the standby position 182 which is a storage unit are configured such that the stirring paddle 17 can be stored along a vertical direction, and are arranged in parallel in a horizontal direction, whereby miniaturization and simplification of the analyzer can be achieved. A vertical length of the standby position 182 is longer than a vertical length of the cleaning tank 181. This is to prevent a risk of damage to the stirring paddle 17 during standby.

The cleaning tank 181 and the standby position 182 are provided with drain ports 184 and 185, respectively, and the water supply port 183, the drain port 184, and the drain port 185 are connected to valves 186. Further, the three valves 186 are connected to a drain 187, a drain 188, and a pump 189. The water inside the cleaning tank 181 and the water inside the standby position 182 flow to the drains 187 and 188 via the drain ports 184 and 185 and the valves 186. The pump 189 can supply cleaning water from a water supply tank 190 to the water supply port 183 under the control of a pump control device.

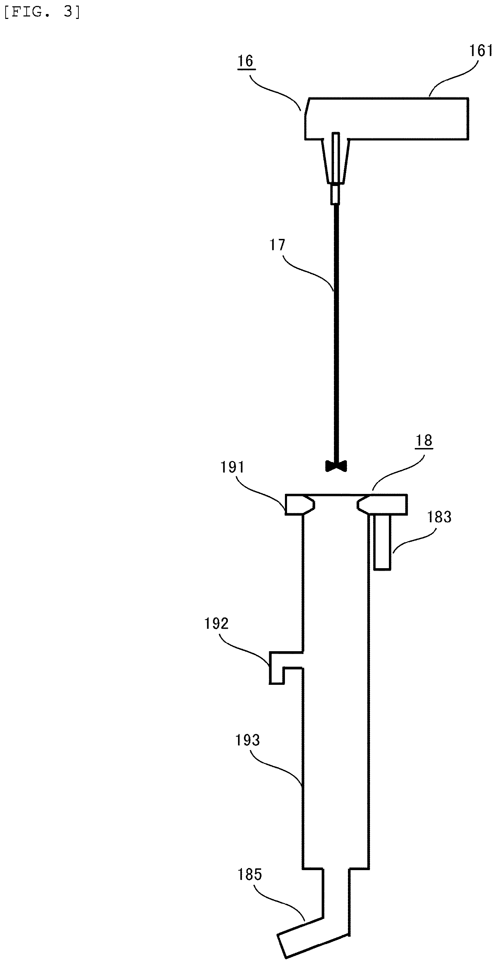

FIG. 3 is a schematic diagram showing a modification of the bead mixer cleaning unit 18 of the automatic analyzer according to the present embodiment. This configuration includes one cylindrical member 193 that serves as the cleaning tank 181 and the standby position 182 of the bead mixer cleaning unit 18 shown in FIG. 2. By integrating the standby position, which is the storage unit, and the cleaning tank, which is the cleaning unit, miniaturization and simplification of the bead mixer cleaning unit can be further achieved. In FIG. 3, only components different from those in FIG. 2 are shown, and illustrations of the same components are omitted.

As shown in FIG. 3, the cleaning tank 181 and the standby position 182 shown in FIG. 2 are integrated into the cylindrical member 193, and further, a paddle contact prevention ring 191 that prevents contact with the stirring paddle 17 is provided on an upper surface portion of the integrated cylindrical member 193. An inner circumference of the contact prevention ring 191 is tapered in both up and down directions to reduce a risk of damage when the stirring paddle 17 is inserted or removed.

An overflow pipe 192 as a discharge hole from which the cleaning water overflows is provided at a predetermined height of the cylindrical member 193, preferably at a position above a center in an extension direction. Thus, the discharge hole for discharging the cleaning water to an outside of a cylindrical body is provided in an inner wall of the cylindrical body and above a vertical center of the cylindrical body. An overflow height due to the discharge hole is made higher than a liquid level height of the reagent vessel 3. With such a configuration, an automatic analyzer having the same effect as that of the configuration shown in FIG. 2 and capable of further achieving miniaturization can be provided.

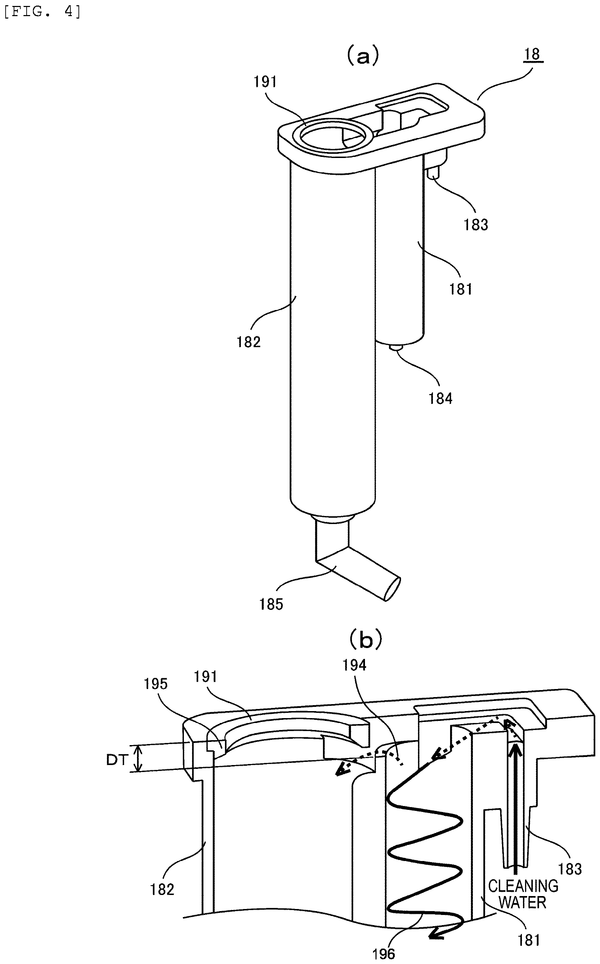

FIG. 4 is a diagram showing a specific configuration example of the bead mixer cleaning unit 18 according to the present embodiment. (a) in FIG. 4 shows a perspective view of the bead mixer cleaning unit 18, and (b) in FIG. 4 is a cross-sectional structural view of an upper part of the bead mixer cleaning unit 18. As illustrated in FIG. 2, the cleaning tank 181 and the standby position 182 are arranged in parallel.

As is clear from FIG. 4, the paddle contact prevention ring 191 that serves as a protection unit of the rod-shaped member is provided at an upper part of the standby position 182 of the bead mixer cleaning unit 18, and when the stirring paddle 17 waits and is stored in the standby position 182, the stirring paddle 17 can be prevented from coming into contact with a wall surface of the standby position 182. The paddle contact prevention ring 191 is provided vertically above a position where the cleaning water flows into the standby position 182. By forming a lower surface of the paddle contact prevention ring 191, which is a protection unit, with a tapered shape 195, a risk of damage when the stirring paddle 17 is taken out of the standby position 182 can be reduced. In FIG. 4, an upper surface and the lower surface of the contact prevention ring 191 may also have a tapered shape as shown in FIG. 3.

As shown in (b) in FIG. 4, the cleaning water injected from the water supply port 183 flows from an upper surface of the cleaning tank 181 to an inside of the cleaning tank 181 along a groove having a downwardly inclined slope, and becomes a vortex flow 196 that spirally flows downstream along a wall surface of the cleaning tank 181. Since the cleaning water from the cleaning tank 181 becomes an overflow 194 and flows into the standby position 182, heights of inner walls of the cleaning tank 181 and the standby position 182 in contact with each other are DT lower than that of an upper surface of the bead mixer cleaning unit 18.

In this way, the standby position 182 that makes the stirring paddle 17 wait and stores the stirring paddle 17 and an overflowing pipe for the cleaning water can be integrated with each other to achieve miniaturization and simplification of the analyzer. In addition, the cleaning water from the cleaning tank 181 is made to be the overflow 194 to the standby position 182 integrated with the cleaning tank 181, whereby the wall surface of the standby position 182 can be cleaned, and dust or the like can be prevented from adhering to the wall surface. By having such a standby position 182, a risk of damage due to contact with a rod-shaped member such as the stirring paddle 17 during maintenance or the like can be reduced. Further, the paddle contact prevention ring 191 is provided on the upper part of the standby position 182, an unexpected external force can be prevented from being applied to the stirring paddle 17 when the stirring paddle 17 is stored in the standby position 182 during the maintenance or the like, and the risk of damage to the stirring paddle 17 can be reduced. The tapered shape of the lower surface or the upper and lower surfaces of the paddle contact prevention ring 191 can reduce the risk of damage when the stirring paddle 17 is taken in and out of the standby position 182.

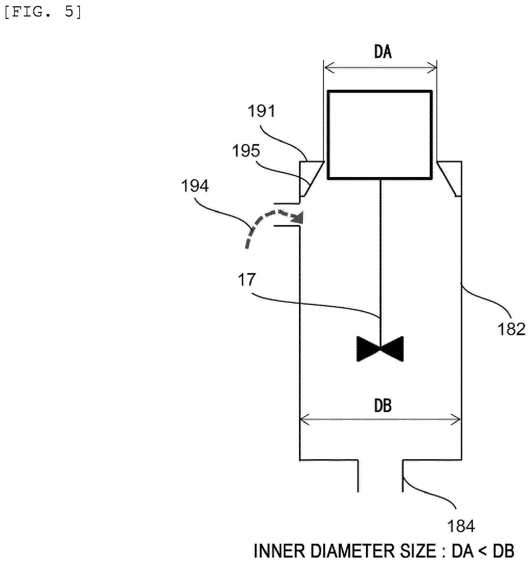

FIG. 5 is a sectional view for illustrating a relationship between the stirring paddle 17 and the standby position 182 of the present embodiment described above. As shown in FIG. 5, when the stirring paddle 17 waits and is stored, the stirring paddle 17 is inserted from an upper part of the paddle contact prevention ring 191 into the standby position 182, and by making an inner diameter DB of the standby position 182 larger than an inner diameter DA of the paddle contact prevention ring 191, the stirring paddle 17 can be prevented from coming into contact with the inner wall of the standby position 182. As described above, by forming the lower surface of the paddle contact prevention ring 191 with the tapered shape 195, the risk of damage when taking out the stirring paddle 17 can be reduced.

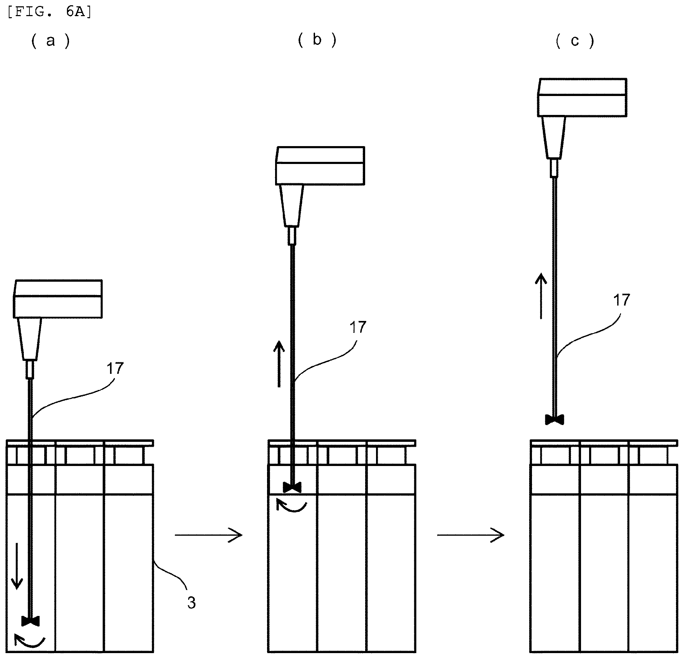

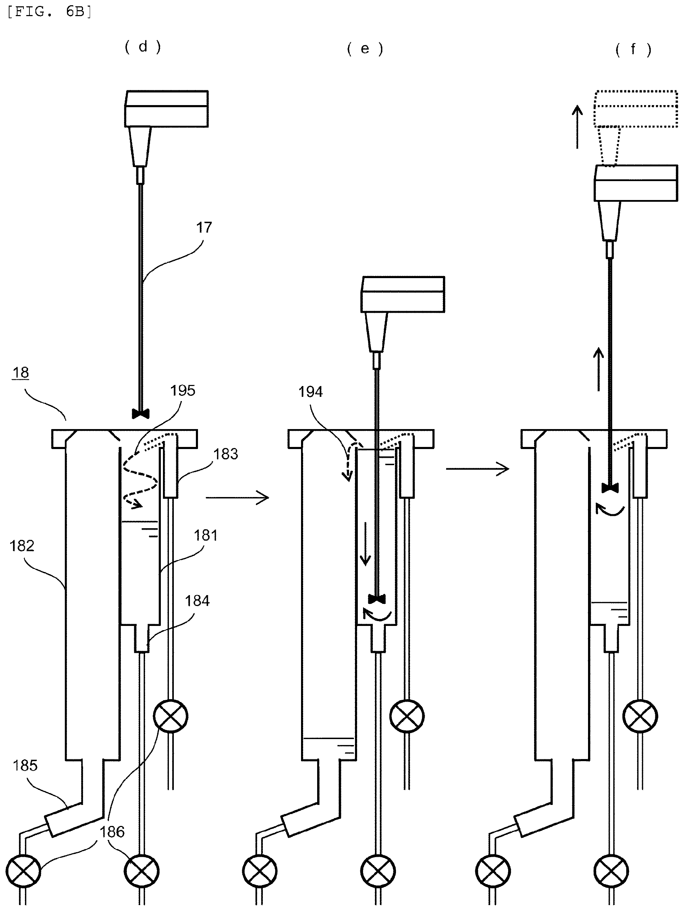

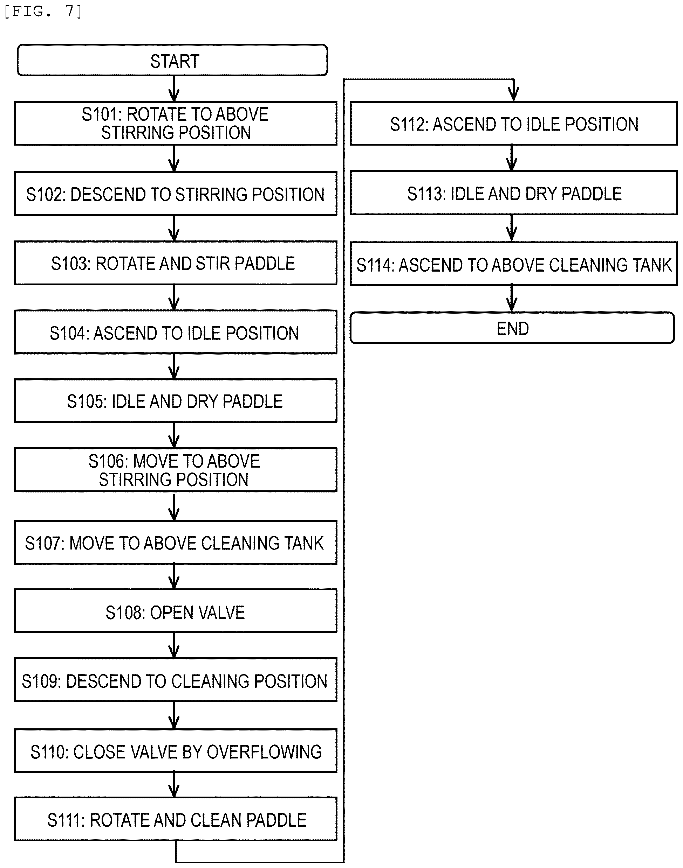

Subsequently, an operation of cleaning steps of the stirring paddle 17 during an analysis operation of the automatic analyzer of the present embodiment will be described with reference to FIGS. 6A, 6B, and 7. FIGS. 6A and 6B are diagrams that show a state of the stirring paddle 17 in each of the cleaning steps (S101 to S114) in the flowchart showing a cleaning procedure of the stirring paddle shown in FIG. 7 and show a water level of the cleaning water.
(a) in FIG. 6A shows a state where the arm of the bead mixer mechanism 16 is rotated such that the stirring paddle 17 is above a stirring position, and after the stirring paddle 17 is descended to the stirring position of the reagent vessel 3, the stirring paddle 17 is rotated to stir (S101, S102, S103). (b) in FIG. 6A shows a state where the stirring paddle 17 is ascended to an idling position and rotated and dried (S104, S105). (c) in FIG. 6A shows a state where the stirring paddle 17 is moved above the stirring position (S106).
(d) in FIG. 6B shows a state where the arm is moved above the cleaning tank 181 such that the stirring paddle 17 is at the stirring position, and the valves 186 for water supply are opened, whereby the cleaning water flows while forming a vortex along the wall surface (S107, S108). (e) in FIG. 6B shows a state where the stirring paddle 17 is descended to a cleaning position, the cleaning water overflows to the standby position 182, the valves 186 of the cleaning tank 181 are closed, and the stirring paddle 17 is rotated to be cleaned (S109, S110, S111). (f) in FIG. 6B shows a state where the stirring paddle 17 ascends to the idling position, and then the stirring paddle 17 is idled and dried, and then the stirring paddle 17 ascends above the cleaning tank 181, the cleaning procedure ends (S112, S113, S114).

FIG. 7 is a flowchart showing the cleaning procedure of the stirring paddle 17 of the bead mixer mechanism during the analysis operation of the automatic analyzer. The contents of the steps (S101 to S114) are as described above, and the descriptions thereof are omitted here. During the analysis operation, the standby position 182 of the bead mixer cleaning unit 18 is not used. The standby position 182 is used for manual or automatic storage during the maintenance operation.

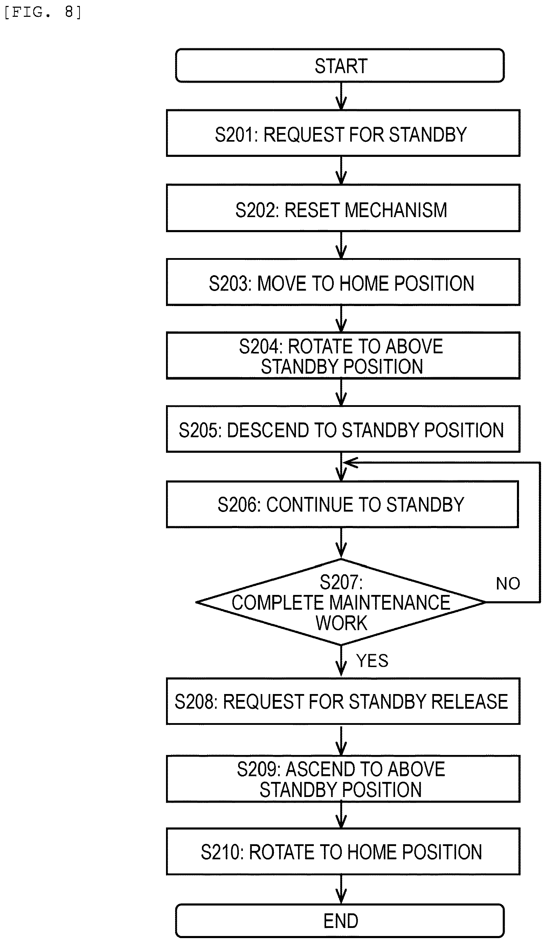

Hereinafter, an automatic or manual separation operation during maintenance will be described with reference to FIG. 8 showing an operation flowchart during the maintenance operation of the automatic analyzer of the present embodiment. In a case of an automatic separation operation, the operation can be executed by using a screen of a display unit of the control unit 200 with the safety cover 4 closed. Meanwhile, in a case of a manual separation operation, if the safety cover 4 is opened, the stirring paddle 17 can be manually stored in the standby position 182. When the stirring paddle 17 itself is desired to be cleaned, the bead mixer arm 161 of the bead mixer mechanism 16 can be ascended manually to clean.

As shown in the operation flowchart during the maintenance in FIG. 8, when a standby request is made (S201), the mechanism is reset (S202) and moves to a home position (S203). Then, the stirring paddle 17 rotates above the standby position 182 by the rotation of the arm of the bead mixer mechanism 16 (S204). Then, the stirring paddle 17 descends to the standby position (S205) and continues to wait (S206). When the maintenance work is completed (YES in S207), a standby release request is made (S208). In response to the standby release request, the stirring paddle 17 ascends above the standby position (S209). After the stirring paddle 17 rotates to the home position (S210), the maintenance operation is ended.

Since the automatic analyzer of Embodiment 1 described in detail above includes the standby position, during the maintenance or the like, the risk of damage due to contact with the stirring paddle can be reduced. In addition, the standby position of the stirring paddle and the overflow pipe of the cleaning water can be integrated with each other to achieve miniaturization and simplification. Further, the cleaning water from the cleaning tank overflows to the standby position, whereby the wall surface of the standby position can be cleaned to prevent dust or the like from adhering to the wall surface. Furthermore, the paddle contact prevention ring is provided at the upper part of the standby position, whereby during the maintenance or the like, an unexpected external force can be prevented from being applied to the paddle during standby or storage or the like, and the risk of damage to the paddle can be reduced. Furthermore, the inner diameter of the paddle contact prevention ring is smaller than the inner diameter of the wall surface of the standby position, whereby the stirring paddle can be prevented from coming into contact with the wall surface of the standby position.

### Embodiment 2

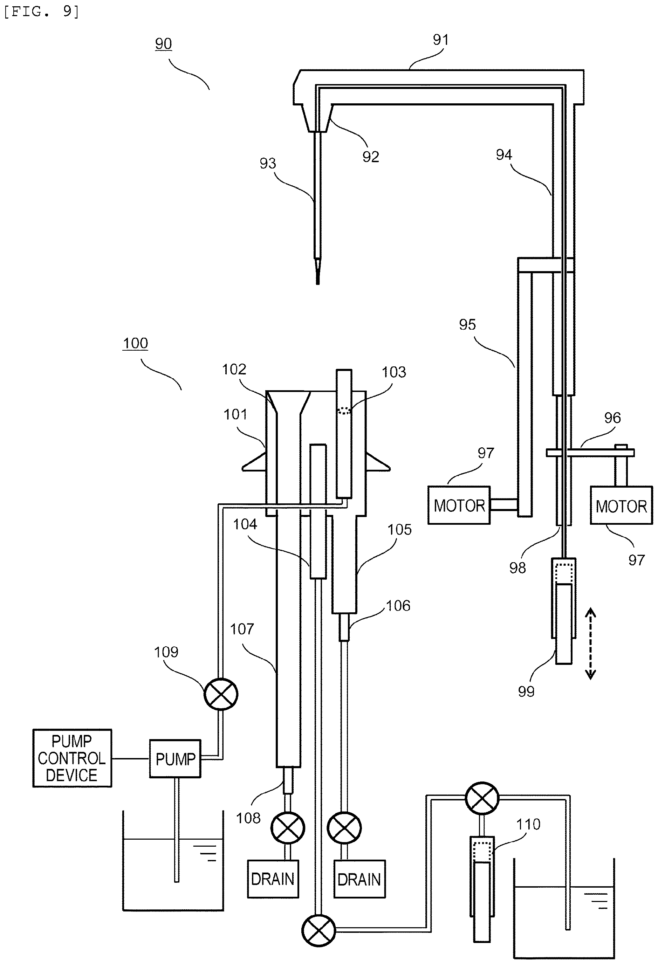

Embodiment 2 is an embodiment of a reagent dispensing mechanism of an automatic analyzer when a rod-shaped member is a reagent dispensing nozzle. In the reagent dispensing mechanism, there is a concern that an adsorbed substance remaining in the dispensing nozzle will be released and mixed in a next reagent when the next reagent is dispensed, and in order to prevent this situation, it is necessary to provide a cleaning mechanism for the reagent dispensing nozzle. FIG. 9 is a schematic diagram of a reagent dispensing mechanism 90 and a reagent dispensing nozzle cleaning unit 100 according to Embodiment 2. In FIG. 9, descriptions of parts common to those of the analyzer of Embodiment 1 will be omitted.

In the reagent dispensing mechanism 90 of FIG. 9, a reagent dispensing nozzle 93 extends directly downward from a nozzle guide 92 at a tip of a reagent dispensing arm 91 and dispenses a reagent. The reagent dispensing arm 91 includes a shaft 94 capable of moving up and down independently, and a vertical drive belt 95 connecting a vertical drive motor 97 and the shaft 94, and thereby can vertically drive the reagent dispensing arm 91 including the reagent dispensing nozzle 93. Further, by providing a rotation drive belt 96 connecting a rotation drive motor and a dispensing syringe 99, the reagent dispensing arm 91 can be rotationally driven. When the dispensing syringe 99 is operated, the reagent can be dispensed from the reagent dispensing nozzle 93.

The reagent dispensing nozzle cleaning unit 100 includes a reagent dispensing cleaning tank 101, a nozzle guide storage unit 102, a water supply port 103, a cleaning liquid supply port 104, a cleaning tank 105, a drain port 106, a standby position 107, a drain port 108, a valve 109, a cleaning liquid syringe 110, and the like. Similar to Embodiment 1, the cleaning water is sent to the reagent dispensing cleaning tank 101 by an operation of a pump controlled by a pump control device, and is used to clean the reagent dispensing nozzle 93 together with a cleaning liquid. The used cleaning water flows to the drain via the drain port 106 and the valve.

Similar to Embodiment 1, the reagent dispensing mechanism of the present embodiment also has a standby position, whereby during the maintenance or the like, the risk of damage due to contact with the reagent dispensing nozzle can be reduced. By integrating the standby position of the reagent dispensing nozzle and the overflow pipe of the cleaning water, miniaturization and simplification of the analyzer can be achieved. Further, the cleaning water from the cleaning tank overflows to the standby position, whereby the wall surface of the standby position can be cleaned to prevent dust or the like from adhering to the wall surface.

The invention is not limited to the embodiments described above and includes various modifications. For example, the above-described embodiments are described in detail for a better understanding of the invention, and the invention is not necessarily limited to those including all configurations described above. In the embodiments described above, the stirring paddle and the reagent dispensing nozzle are described as the rod-shaped member, but the same configuration can be applied to the standby or storage of other rod-shaped members of the automatic analyzer such as a specimen dispensing nozzle.

Further, although an example of creating a program for implementing a part or all of the configurations, functions, and control units described above is mainly described, it is needless to say that a part or all of them may be implemented by hardware, for example, by designing an integrated circuit. That is, all or a part of the functions of the processing units may be implemented by the integrated circuit such as an application specific integrated circuit (ASIC) or a field programmable gate array (FPGA) instead of the program.

### Reference Sign List

- 1:: automatic analyzer
- 2:: reagent disk
- 3:: reagent vessel
- 4:: safety cover
- 5:: specimen transport line
- 5a:: specimen rack
- 6:: specimen dispensing mechanism
- 7:: tip rack (specimen dispensing tip/reaction vessel supply unit)
- 8:: specimen dispensing tip/reaction vessel transport mechanism
- 9:: incubator
- 10:: specimen dispensing tip
- 11:: specimen dispensing tip buffer
- 12:: specimen dispensing tip/reaction vessel disposal hole
- 13:: stirring mechanism
- 14:: reaction vessel
- 15:: reagent dispensing mechanism
- 16:: bead mixer mechanism
- 17:: stirring paddle
- 18:: bead mixer cleaning unit
- 19:: reagent dispensing nozzle cleaning unit
- 20:: reagent vessel loading port
- 21:: reagent cool box
- 22:: lock receiving unit
- 23:: lock unit (interlock unit)
- 24:: handhold unit
- 30:: B/F separation unit
- 31:: detection unit
- 32:: detection unit cover
- 33:: B/F separation probe
- 34:: separation unit
- 35:: B/F separation probe cleaning unit
- 36:: B/F separation stirring unit
- 37:: transport mechanism
- 90:: reagent dispensing mechanism
- 91:: reagent dispensing arm
- 92:: nozzle guide
- 93:: reagent dispensing nozzle
- 99:: dispensing syringe
- 100:: reagent dispensing nozzle cleaning unit
- 101:: reagent dispensing cleaning tank
- 102:: nozzle guide storage unit
- 103, 183:: water supply port
- 104:: cleaning liquid supply port
- 105, 181:: cleaning tank
- 106, 108, 184, 185:: drain port
- 107, 182:: standby position
- 109, 186:: valve
- 110:: cleaning liquid syringe
- 187, 188:: drain
- 189:: pump
- 190:: water supply tank
- 191:: paddle contact prevention ring
- 194:: overflow
- 195:: tapered shape
- 200:: control unit
- 201:: door open and close detection sensor

## Claims

1. An automatic analyzer, comprising:
a storage unit configured to store a rod-shaped member along a vertical direction; and
a cleaning unit configured to clean the rod-shaped member.

2. The automatic analyzer according to claim 1, wherein
the storage unit and the cleaning unit are respectively arranged in parallel in a horizontal direction.

3. The automatic analyzer according to claim 2, wherein
a vertical length of the storage unit is longer than a vertical length of the cleaning unit.

4. The automatic analyzer according to claim 2, wherein
the storage unit is arranged so that cleaning water overflowing from the cleaning unit flows into the storage unit.

5. The automatic analyzer according to claim 4, wherein
a protection unit is provided at an upper part of the storage unit to prevent damage to the rod-shaped member when the rod-shaped member is taken in and out of the storage unit, and
the protection unit is arranged vertically above a position where the cleaning water flows into the storage unit.

6. The automatic analyzer according to claim 5, wherein
the storage unit has a cylindrical shape, and
an inner diameter of the protection unit is smaller than an inner diameter of the cylindrical storage unit.

7. The automatic analyzer according to claim 5, wherein
the rod-shaped member is a stirring paddle of a bead mixer mechanism, or a reagent dispensing nozzle of a reagent dispensing mechanism.

8. The automatic analyzer according to claim 7, wherein
the storage unit stores the rod-shaped member during a maintenance operation.

9. The automatic analyzer according to claim 1, wherein
the storage unit and the cleaning unit are configured by one cylindrical body.

10. The automatic analyzer according to claim 9, wherein
a discharge hole for discharging cleaning water to an outside of the cylindrical body is provided on an inner wall of the cylindrical body and above a vertical center of the cylindrical body.

11. An automatic analyzer, comprising:
a cleaning tank configured to clean a stirring paddle;
a standby position configured to make the stirring paddle which is juxtaposed to the cleaning tank wait; and
an inflow port configured to flow cleaning water into the cleaning tank, wherein
the standby position is arranged so that the cleaning water overflowing from the cleaning tank flows into the standby position.

12. The automatic analyzer according to claim 11, wherein
a vertical length of the standby position is longer than a vertical length of the cleaning tank.

13. The automatic analyzer according to claim 11, wherein
the standby position stores the stirring paddle during a maintenance operation.

14. The automatic analyzer according to claim 11, wherein
a paddle contact prevention ring is provided at an upper part of the standby position to prevent damage to the stirring paddle when the stirring paddle is taken in and out of the standby position, and
the paddle contact prevention ring is arranged vertically above a position where the cleaning water flows into the standby position.

15. The automatic analyzer according to claim 14, wherein
the standby position has a cylindrical shape, and
an inner diameter of the paddle contact prevention ring is smaller than an inner diameter of the cylindrical standby position.
